# EUROPEAN PATENT APPLICATION

(11) **EP 3 336 353 A1**
(43) Date of publication of application: **20.06.2018**
(21) Application number: 16203632.1
(22) Date of filing: 13.12.2016
(51) Int. Cl.: F04B 35/01, F04B 35/04, F04B 39/00, F04B 53/00, F16H 55/36, F16F 15/126, F16F 15/14

(54) **DAMPING ELEMENT FOR A REFRIGERANT COMPRESSOR**

(71) Applicant: Valeo Klimasysteme GmbH, 96476 Bad Rodach (DE)
(72) Inventor: FIENE, Andreas, BAD RODACH (DE); KENNEL, Markus, BAD RODACH (DE); LI, Li, BAD RODACH (DE); GAERTNER, Raphaël, BAD RODACH (DE)
(74) Representative: Tran, Chi-Hai

(57) **Abstract**

The invention provides a damping element (10) adapted for being arranged between a drive pulley (7) for driving a refrigerant compressor (5) and a shaft (6) of the refrigerant compressor (5), comprising a body (18) made from an elastomeric material, the body (18) having an external circumference (12) adapted for being connected to the drive pulley (7), the body further having an inner circumference (13) adapted for being connected to a hub (14) adapted for being associated with the compressor shaft (6), characterized in that the body (18) is provided with a plurality of weakening structures (20) adapted for increasing the resiliency of the body (18).

## Description

The invention relates to a damping element adapted for being arranged between a drive pulley for driving a refrigerant compressor and a shaft of the refrigerant compressor, comprising a body made from an elastomeric material, the body having an external circumference adapted for being connected to the drive pulley, the body further having an inner circumference adapted for being connected to a hub associated with the compressor shaft.

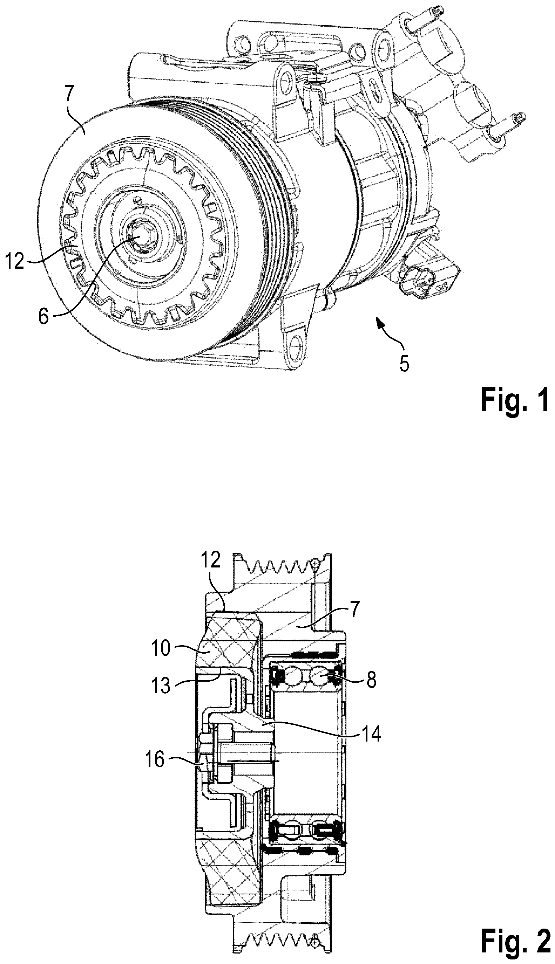

A refrigerant compressor for which such damping element can be used, is shown in Figure 1. It is used for compressing refrigerant which circulates through the various components of an air conditioning unit used in a vehicle.

The compressor 5 is typically provided with a plurality of pistons which displace and compress the refrigerant. A swash plate can be used for driving the pistons in a reciprocating manner. The swash plate is driven via a drive shaft 6, the drive shaft in turn being driven by a pulley 7. Pulley 7 is mounted on a cylindrical projection of the housing of compressor 5 via roller bearings 8 (please see Figure 2).

A damping element 10 made from an elastomeric material (e.g. rubber) is arranged between pulley 7 and shaft 6. Damping element 10 is connected with its outer circumference to pulley 7. To this end, damping element 10 is provided with a plurality of teeth 12 at the outer circumference of the body of the damping element.

Damping element 10 is further provided with an inner circumference 13 which is connected to a hub 14 which is used for torque transmission to shaft 6. Hub 14 can in particular be made from a metallic material and can be provided with splines. Further, a screw 16 can be provided for connecting hub 14 to shaft 6 in an axial direction.

The inner circumference 13 of damping element 10 can be connected to the outer circumference of hub 14 by cure adhesion. As an alternative, teeth can be provided at the inner circumference so as to achieve a form-fitting connection towards the hub. It is also possible to connect the inner circumference 13 to an intermediate element which then is connected to the hub 14. The same is true for the connection between the outer circumference of the damping element 10 and the pulley; an intermediate element can be used.

Radially outside of hub 14, damping element 12 has a solid body 18 which is configured for damping torque fluctuations resulting from peaks in the drive torque applied to pulley 7 and fluctuations in the load on shaft 6.

It is known in the prior art to reduce variations of the speed of rotation of the compressor shaft by adding an inertia wheel. An example of such structure is shown in EP 3 034 875 A1. While this structure is effective, it has the disadvantage of increasing the entire weight of the refrigerant compressor.

The object of the invention is to reduce vibrations and/or fluctuations in the torque transmitted to the compressor shaft while at the same time reducing the weight of the refrigerant compressor.

To this end, a damping element of the type mentioned above is characterized in that the body is provided with a plurality of weakening structures adapted for increasing the resiliency of the body. The weakening structures have two advantageous effects. First, they allow to better absorb vibrations which occur in an axial direction between the pulley and the compressor shaft since they increase the resiliency of the body in an axial direction. These axial vibrations are the result of the reciprocating movement of the pistons of the compressor. Second, it has been found out that the weakening structures allow shifting the resonance frequency of the torque transmitting path from the pulley to the refrigerant compressor, to frequencies which are less critical. In particular, the weakening structures change (lower) the resonance frequency of the compressor torque by weakening the spring constant of the damping element, in particular the spring constant in a circumferential direction. This allows using an inertia wheel with less weight or even no inertia wheel at all, without the risk that there is resonance in the usual operating speeds of the compressor.

The above object is further solved by a compressor for a vehicle air conditioning unit, having a pulley and a compressor shaft to which a hub is connected, and having a damping element as discussed previously, the pulley being connected in a torque-transmitting manner to the outer circumference of the damping element, and the hub being connected in a torque-transmitting manner to the inner circumference of the damping element.

According to an embodiment of the invention, the weakening structures comprise recesses in the body. The recesses can be in the form of a rounded groove or a similar significant reduction of the thickness of the body in an axial direction.

According to a preferred embodiment, the weakening structures comprise slots in the body. It has surprisingly been found out that the slots are very effective in increasing the axial resiliency of the damping element and lowering the spring constant in a circumferential direction while not negatively affecting the ability to transmit the drive torque towards the compressor shaft.

Preferably, the weakening structures or slots extend over an angular range of more than 10% of the circumference of the body. It has been found out that already small structures are advantageous for achieving the desired effect. This is even more true if the weakening structures extend over more than 50% of the circumference as this is the case for preferred embodiments.

According to one embodiment, at least one of the weakening structures extends along a straight line. The advantage of this type of weakening structure is that upon occurrence of high drive torques, the body of the damping element is deformed until opposing walls of the slot abut at each other such that there is an increase of the stiffness of the damping element in a circumferential direction.

It is possible to have the end portions of the straight weakening structure at the same distance from the axis of rotation of the damping element. In other words, a radially extending line through the middle of the weakening structure is perpendicular to the weakening structure.

According to a preferred embodiment of the invention, one of the end portions of the straight weakening structure is adjacent the inner circumference of the damping element while the other one of the end portions is adjacent the external circumference. In other words, a radially extending line through the middle of the weakening structure extends at an angle which is different from 90°, with respect to the weakening structure. This orientation of the weakening structure results in increased torque transmitting capabilities as opposing wall portions of the weakening structure more readily come into contact with each other than compared to a weakening structure where both end portions have the same distance from the axis of rotation of the damping element.

Preferably, teeth are provided at the outer circumference of the damping element, the end portion adjacent the external circumference being arranged on a radially extending line which passes through the head portion of one of the teeth. This orientation allows arranging the outer end of the weakening structure at a larger radius while at the same time guaranteeing that there still is enough wall thickness of the damping element remaining around the end portion in each direction.

In an alternative embodiment, at least one of the weakening structures extends along a circular path. A circular weakening structure, in particular if its center coincides with the axis of rotation of the damping element, is kept "open" even if a high torque is to be transmitted from the pulley to the shaft, thereby keeping the axial resiliency of the damping element at a constant level.

According to one embodiment of the invention, at least one of the weakening structures has at least one portion which extends in a direction which has a maximum angle of inclination of 45° with respect to a radial direction, and a portion which extends in a generally circumferential direction. This type of weakening structure combines the advantages of a circular weakening structure with the advantages of a straight weakening structure, in particular if the weakening structure has a centrally arranged portion which extends in a generally circumferential direction, and two portions which extend in an oblique direction with respect to a radial direction on opposite sides of the centrally arranged portion. The walls of the two portions extending in an oblique direction with respect to a radial direction can be used for transmitting a high torque while the portion extending in the circumferential direction is still available for ensuring a high resiliency of the body in an axial direction.

Preferably, at least one of the weakening structures terminates at its opposite ends with a circular structure. This guarantees that no cracks or fractures form in the body of the damping element.

Depending on the particular requirements and on the desired damping, the diameter of the circular structure can be the same as the width of the weakening structure, or the diameter can be chosen at least twice the width of the weakening structure.

According to a preferred embodiment, the weakening structure is delimited by wall portions facing each other, the wall portions, viewed in a direction parallel to the axis of rotation of the damping element, being parallel to each other. This guarantees that there is no axial force component which is being generated when the wall portions of the weakening structure are made to engage at each other due to a high torque being transmitted from the pulley to the shaft.

Preferably, the wall portions are spaced from each other by a distance which is between 1.0 and 3.0 mm. This has proven as a good compromise between a good resiliency of the body in an axial direction and good torque transmission capabilities.

Preferably, three weakening structures are provided equally spaced in a circumferential direction. Depending on the particular structure, different numbers of weakening structures can be used as well.

The invention will now be described with reference to the enclosed drawings. In the drawings,
- Figure 1 shows a prior art refrigerant compressor in a perspective view;
- Figure 2 shows in a cross-section the pulley and the damping element of the compressor of Figure 1;
- Figure 3 shows in a perspective view the damping element of the compressor shown in Figure 1;
- Figure 4 shows in a side view a damping element according to a first embodiment of the invention;
- Figure 5 shows at an enlarged cross-section a detail of the damping element of Figure 4;
- Figure 6 shows in a view similar to Figure 5 an alternative embodiment of the invention;
- Figure 7a to 7c show different arrangements of the weakening structures used in the embodiment of Figure 4;
- Figure 8a to 8c show further embodiments of the damping element of the invention;
- Figure 9 shows in more detail the embodiment of Figure 8a;
- Figure 10 shows a still further embodiment of the damping element with weakening structures;
- Figure 11 schematically shows the deformation of the body of the damping element with the weakening structures of Figure 9; and
- Figure 12 schematically shows the deformation of the body of the damping element upon transmission of high torques, with the weakening structure similar to the one shown in Figure 4.

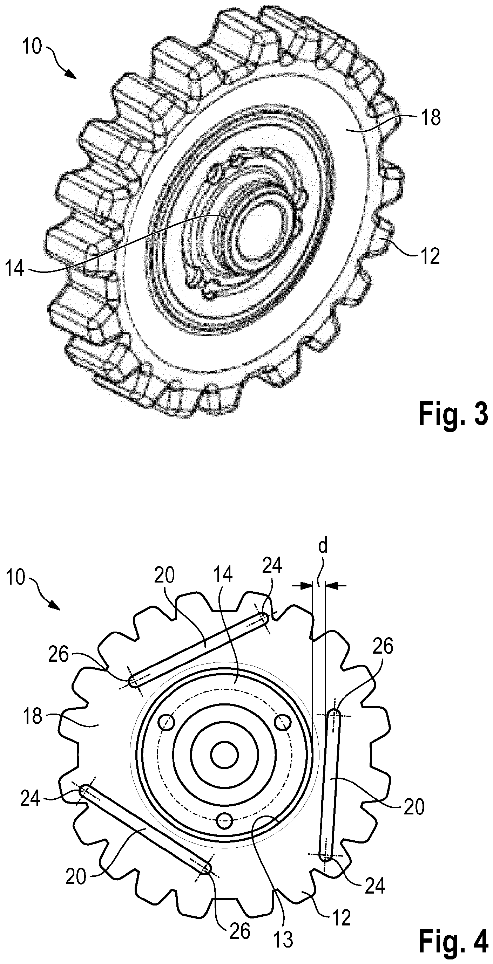

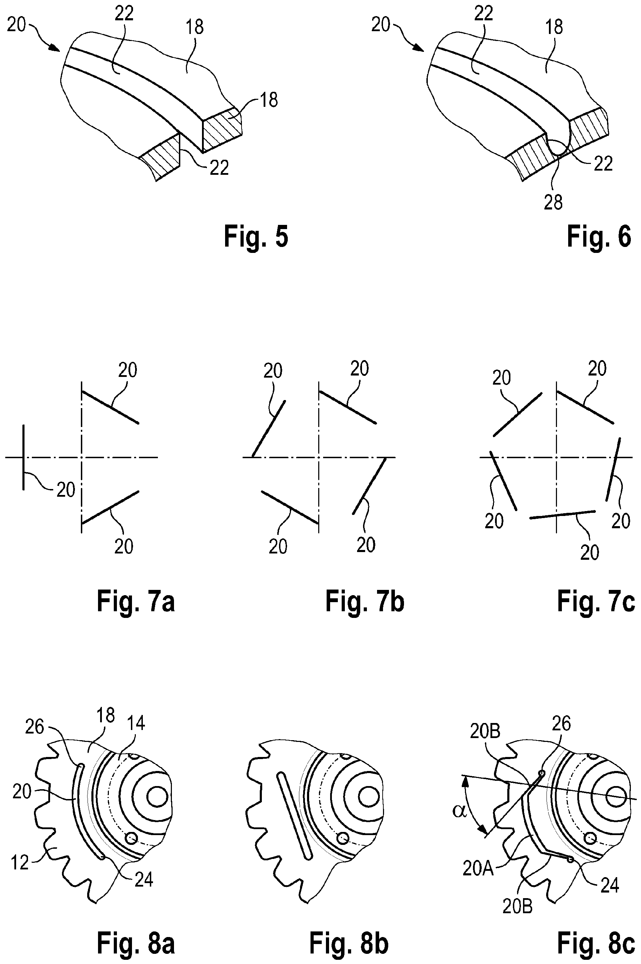

A first embodiment of the damping element 10 is shown in Figures 4 and 5.

Regarding its general structure with an elastomeric body 18, an internal hub 14, inner circumference 13 connected to the outer circumference of hub 14 by cure adhesion, and teeth 12 at its outer circumference, it corresponds to the damping element shown in Figures 1 to 3.

The difference over the previously known damping element is that weakening structures 20 are provided. The weakening structures 20 are here in the form of a slot (please see Figure 5) which extends, in an axial direction, completely through body 18 of damping element 10.

The slot is delimited by walls 22 which extend parallel to each other along the direction of extent of the respective weakening structure and which also extend parallel to each other when viewed in a direction parallel to the axis of rotation of the damping element.

In the embodiment of Figure 4, each weakening structure 20 extends along a straight line. Here, three weakening structures are used which are arranged equally spaced from each other in a circumferential direction.

Each weakening structure 20 is arranged such that one of its end portions (here denominated with reference numeral 24) is arranged adjacent the outer circumference while the opposite end portion 26 is arranged adjacent hub 14. Outer end portion 24 is arranged at a radially extending line which passes through the head portion of one of the teeth 12, with the radius on which end portion 24 lies, approximately corresponding to the radius of the root of tooth 12. This position allows moving end portion 24 outwardly without having the risk of the damping element being damaged upon transmission of high torque.

The length of the weakening structures is such that it tangentially passes hub 14 at a certain minimum distance d until the weakening structure terminates in end portion 26. The minimum distance d is in the order of 1 to 3 mm.

The end portions 24, 26 here have a rounded contour. In other words, each of the end portions 24, 26 correspond to half of a circle, the diameter of the circle being equal to the space between walls 22 of the respective weakening structure 20. The distance between walls 22 (or the width of the weakening structure 20) is in the order of 1 to 3 mm.

An alternative weakening structure is shown in Figure 6. The difference over the weakening structure of Figures 4 and 5 is that it is not a slot which extends completely through body 18 but is in the form of a groove which extends through body 18 for a certain depth, with a material ridge 28 remaining and forming the bottom of the groove.

In Figures 7a to 7c, different arrangements of weakening structures according to an alternative embodiment are shown.

The main difference over the embodiment of Figure 4 is that in Figure 7a to 7c, the weakening structures are arranged such that both end portions are arranged at the same radius. In other words, a radially extending line which is perpendicular to the direction of extent of the weakening structure passes through the middle of the weakening structure.

In Figure 7a, three weakening structures are arranged equally spaced in a circumferential direction. In Figure 7b, four weakening structures are used, and in Figure 7c, five weakening structures are used.

In Figures 8a to 8c, different configurations of weakening structures are shown, which all have both end portions 24, 28 arranged at the same radius.

In Figure 8a, weakening structure 20 does not extend along a straight line but is curved. The center of curvature here coincides with the axis of rotation of damping element 10. In other words, weakening structure 20 is a part of a circle.

In Figure 8b, weakening structure 20 extends along a straight line.

In Figure 8c, weakening structure 20 is composed of a circular portion 20A which forms the middle portion of weakening structure 20, and two straight portions 20B which are arranged on either side of central portion 20A. Central portion 20A is part of a circle whereas the outer portions 20B extend along a straight line. The orientation of the outer portions 20B is such that they are inclined by an angle α of approximately 45° with respect to a radially extending line passing through a point in the middle of the straight portion 20B.

The end portions 24, 26 are here formed with a diameter which is larger than the width of the outer portions 20B. The diameter of the circular form delimiting the end portions 24, 26 can be twice the width of weakening structure 20 in outer portion 20B.

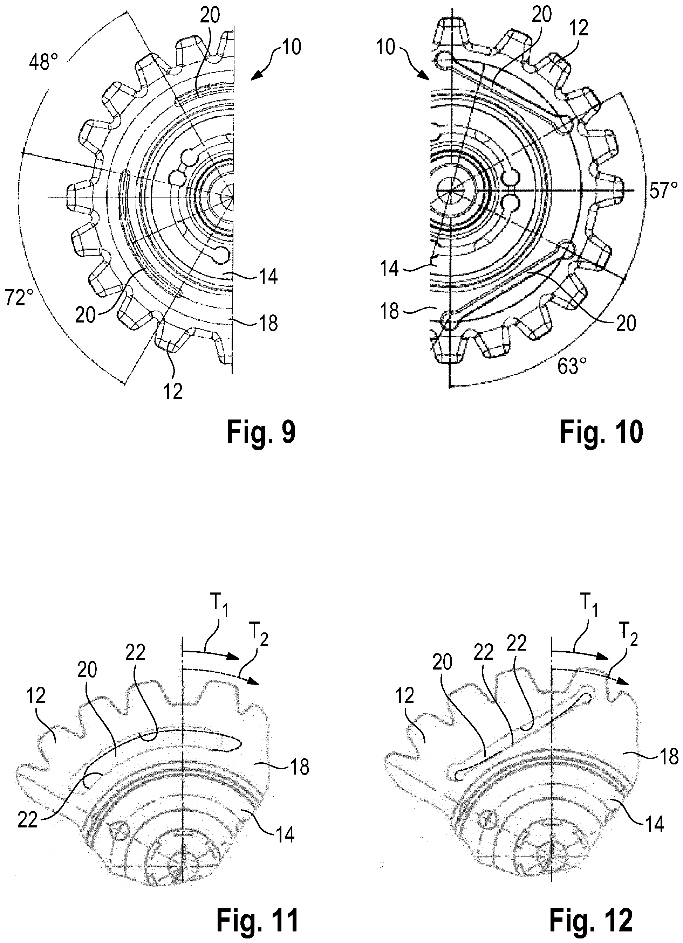

In Figure 9, the extent of weakening structure 20 in a circumferential direction is indicated. Here, each weakening structure extends over an angle of 72° while the "remaining" material between adjacent weakening structures 20 is 48°. Thus, weakening structures 20 extend over 60% of the circumference of damping element 10 while the remaining material bridges occupy 40%.

In the example of Figure 10, each weakening structure extends over an angular range of 63° while the material bridge between adjacent weakening structures 20 occupies an angular range of 57°. Thus, the weakening structures occupy 53% of the circumference of body 18 while the material bridges occupy 47%.

Figures 11 and 12 will now be used for explaining the deformation behavior of body 18 of damping element 10, in particular the deformation of the weakening structures. With solid lines, the contour of the weakening structure is shown upon transmission of a low torque T₁ while the contour of the weakening structure upon transmission of high torque T₂ is shown in dashed lines.

In Figure 11, a circular weakening structure 20 is shown. It can be seen that the entire weakening structure is displaced in a circumferential direction, with the outer side of the weakening structure being deformed further than the inner side. It is important to note that the weakening structure as such with spaced walls 22 is present even when high torques are being transmitted. The weakening structure is effective to reduce the spring constant of the damping element 10 when subjected to loads acting in a circumferential direction between the outer and the inner circumference (in other words: from the pulley 7 towards the hub 14).

In Figure 12, a straight weakening structure is shown which is arranged similar to the embodiment of Figure 4. It can be seen that upon application of high torque, the weakening structure is deformed until the outer wall 22 is pressed against the inner wall 22. In other words, the weakening structure is deformed until there is a width of zero so that force can be transmitted directly in the region of the weakening structure by the two walls abutting at each other. The weakening structure thus reduces the spring constant in a circumferential direction for "normal" working torques but ensures direct torque transfer when excessive torques are acting from the pulley 7 towards the hub 14.

Comparing the structures of Figures 11 and 12, it can be seen that with a circular weakening structure, it remains available even if high torque is being transmitted, with the torque being transmitted only by the material bridges between adjacent weakening structures. With the configuration of Figure 12, the weakening structure 20 is available for transmission of high torque while the resiliency will be impaired to a certain extent because of the friction between the walls 22 being pressed against each other.

Assuming the structure shown in Figure 8c in a condition where a high torque is transmitted, it is readily understood that one of the outer portions 20B is available for transmission of high torque while the central portion 20A remains "open" for guaranteeing a high resiliency in an axial direction.

## Claims

1. Damping element (10) adapted for being arranged between a drive pulley (7) for driving a refrigerant compressor (5) and a shaft (6) of the refrigerant compressor (5), comprising a body (18) made from an elastomeric material, the body (18) having an external circumference (12) adapted for being connected to the drive pulley (7), the body further having an inner circumference (13) adapted for being connected to a hub (14) associated with the compressor shaft (6), **characterized in that** the body (18) is provided with a plurality of weakening structures (20) adapted for increasing the resiliency of the body (18).

2. The damping element (10) of claim 1 wherein the weakening structures (20) comprise recesses in the body (18).

3. The damping element (10) of claim 2 wherein the recesses extend over an angular range of more than 10% of the circumference of the body (18).

4. The damping element (10) of claim 1 wherein the weakening structures (20) comprise slots in the body.

5. The damping element (10) of claim 4 wherein the slots extend over an angular range of more than 10% of the circumference of the body (18).

6. The damping element (10) of any of the preceding claims wherein at least one of the weakening structures (20) extends along a straight line.

7. The damping element (10) of claim 6 wherein both end portions of the straight weakening structure (20) have the same distance from the axis of rotation of the damping element (10).

8. The damping element (10) of claim 6 wherein one of the end portions (24, 26) of the straight weakening structure (20) is adjacent the inner circumference (13) of the damping element and the other one of the end portions (24, 26) is adjacent the external circumference.

9. The damping element (10) of claim 8 wherein teeth (12) are provided at the outer circumference of the damping element, the end portion (24) adjacent the external circumference being arranged on a radially extending line which passes through the head portion of one of the teeth (12).

10. The damping element (10) of any of claims 1 to 3 wherein at least one of the weakening structures (20) extends along a circular path.

11. The damping element (10) of claim 8 wherein the center of the circular path coincides with the axis of rotation of the damping element (10).

12. The damping element (10) of any of claims 1 to 5 wherein at least one of the weakening structures (20) has at least one portion (20B) which extends in a direction which has a maximum angle of inclination (α) of 45° with respect to a radial direction, and a portion (20A) which extends in a generally circumferential direction.

13. The damping element (10) of claim 12 wherein the weakening structure (20) has a centrally arranged portion (20A) which extends in a generally circumferential direction, and two portions (20B) which extend in an oblique direction with respect to a radial direction on opposite sides of the centrally arranged portion (20A).

14. The damping element (10) of any of the preceding claims wherein at least one of the weakening structures terminates at its opposite ends with a circular structure (24, 26).

15. The damping element (10) of claim 14 wherein the diameter of the circular structure (24, 26) is the same as the width of the weakening structure (20).

16. The damping element (10) of claim 14 wherein the diameter of the circular structure (24, 26) is at least twice the width of the weakening structure (20).

17. The damping element (10) of any of the preceding claims wherein the weakening structure (20) is delimited by wall portions (22) facing each other, the wall portions (22), viewed in a direction parallel to the axis of rotation of the damping element (10), being parallel to each other.

18. The damping element (10) of claim 17 wherein the wall portions (22) are spaced from each other by 1.0 to 3.0 mm.

19. The damping element (10) of any of the preceding claims wherein three weakening structures (20) are provided equally spaced in a circumferential direction.

20. The damping element (10) of any of the preceding claims wherein the weakening structures (20) extend over more than 50% of the circumference.

21. Compressor (5) for a vehicle air conditioning unit, having a pulley (7) and a compressor shaft (6) to which a hub (14) is connected, and having a damping element (10) according to any of the preceding claims, the pulley (7) being connected in a torque-transmitting manner to the outer circumference of the damping element (10) and the hub (14) being connected in a torque-transmitting manner to the inner circumference of the damping element (10).
